# EUROPÄISCHE PATENTSCHRIFT

(11) **EP 1 392 464 B1**
(45) Veröffentlichungstag und Bekanntmachung des Hinweises auf die Patenterteilung: **27.07.2005**
(21) Anmeldenummer: 02753051.8
(22) Anmeldetag: 14.05.2002
(51) Int. Cl.: B23D 63/12

(54) **SCHLEIFMASCHINE ZUM BEIDSEITIGEN SCHLEIFEN VON SÄGEZAHNFLANKEN**
GRINDING MACHINE FOR DOUBLE-SIDED GRINDING OF SAW TOOTH EDGES
AFFUTEUSE PERMETTANT L'AFFUTAGE BILATERAL DES BORDS D'UNE DENT DE SCIE

(30) Priorität: 17.05.2001 DE 10124203
(43) Veröffentlichungstag der Anmeldung: 03.03.2004
(73) Patentinhaber: VOLLMER WERKE MASCHINENFABRIK GMBH, D-88400 Biberach (DE)
(72) Erfinder: LENARD, Peter, 88400 Biberach (DE); BECK, Ernst, 88400 Biberach (DE)
(74) Vertreter: Röthinger, Rainer, Dipl.-Phys.
(86) Internationale Anmeldenummer: PCT/EP2002/005303
(87) Internationale Veröffentlichungsnummer: WO 2002/092270

(56) Entgegenhaltungen:
- DE-A- 19 855 773
- DE-A- 19 920 101
- US-A- 4 848 205

## Beschreibung

Die Erfindung betrifft eine Schleifmaschine gemäß dem Oberbegriff des Anspruchs 1 zum beidseitigen Schleifen von Zahnflanken insbesondere hartmetallbestückter Kreissägeblätter, mit zwei Schleifeinheiten mit je einem Schleifkörper, einem ersten Antrieb, um mindestens eine der beiden Schleifeinheiten entlang einer ersten Achse, die senkrecht zu einer das Sägeblatt enthaltenden Ebene verläuft, zu bewegen, und einem zweiten Antrieb, um mindestens eine der beiden Schleifeinheiten entlang einer zweiten Achse, die parallel zu Drehachsen der Schleifkörper verläuft, zu bewegen.

Eine Schleifmaschine zum beidseitigen Schleifen von Sägezahnflanken ist aus der DE 42 44 180 bekannt. Bei der bekannten Schleifmaschine sind für jede der beiden Schleifeinheiten je zwei Schlitten vorgesehen. Mittels der beiden Schlitten lässt sich jede Schleifeinheit entlang zweier senkrecht zueinander verlaufender Achsen bewegen. Die erste dieser beiden Achsen verläuft senkrecht zu derjenigen Ebene, in welcher das Sägeblatt angeordnet ist (Sägeblattebene). Ein erster Antrieb gestattet es, zur Bearbeitung des Sägeblatts die beiden Schleifeinheiten entlang der ersten Achse aufeinander zu zu bewegen. Ein zweiter Antrieb ermöglicht ein Zustellen der beiden Schleifeinheiten entlang der zweiten Achse.

Bei der bekannten Schleifmaschine lässt sich ein tangentialer Freiwinkel, den die Zahnflanken mit der Sägeblattebene einschließen, durch geeignete Wahl des Schleifkörperdurchmessers sowie durch Neigen der Drehachsen der Schleifkörper bezüglich der die zweite Achse definierenden Zustellrichtung zu Beginn des Schleifvorgangs fest einstellen.

Aus der DE 198 55 773 A, die den nächstkommenden Stand der Technik darstellt, ist eine Sägeblattschärfmaschine mit unabhängigen Schleifköpfen bekannt. Die einzelnen Schleifköpfe sind entlang zweier y-Achsen, einer x-Achse sowie einer z-Achse bewegbar.

Die DE 199 20 101 A betrifft eine Sägeblattschleifmaschine mit einem Schleikopf. Der Schleifkopf ist schwenkbar und in drei Raumrichtung verstellbar gelagert. In einer ausgewählten Schwenkposition ist eine dieser Raumrichtungen radial zu dem zu schleifenden Sägeblatt ausgerichtet.

Der Erfindung liegt die Aufgabe zugrunde, eine Schleifmaschine zur Verfügung zu stellen, welche eine erweiterte Funktionalität besitzt, sowie ein geeignetes Steuerverfahren für diese Schleifmaschine anzugeben.

Die Aufgabe wird gelöst durch eine Vorrichtung gemäß Anspruch 1 und ein Verfahren gemäß Anspruch 6. Die Unteransprüche betreffen vorteilhafte Ausgestaltungen und Weiterbildungen der Erfindung.

Ausgehend von einer Schleifmaschine mit den eingangs genannten Merkmalen ist bei der erfindungsgemäßen Schleifmaschine zusätzlich ein dritter Antrieb vorhanden, um eine der beiden Schleifeinheiten oder beide Schleifeinheiten entlang einer dritten Achse, die senkrecht zur ersten und zur zweiten Achse verläuft, zu bewegen. Eine derart ausgestaltete Schleifmaschine lässt sich mittels des erfindungsgemäßen Steuerverfahrens derart steuern, dass während des Schleifens eines Zahns der Tangentialfreiwinkel einer Zahnflanke entlang der zweiten Achse, d.h. entlang der Zahnflanke, variiert wird. Die Zahnflanken können durch Variation des Tangentialfreiwinkels profiliert werden. Die erfindungsgemäß ausgestaltete Schleifmaschine stellt folglich einen weiteren Freiheitsgrad bezüglich des Bearbeitens der Zahnflanken zur Verfügung.

Die Variation des Tangentialfreiwinkels entlang der Zahnflanken erfolgt zweckmäßigerweise mittels eines bahngesteuerten Schleifens entlang der zweiten und der dritten Achse. Zu diesem Zweck kann eine gemeinsame Steuereinheit für zumindest den zweiten und den dritten Antrieb vorgesehen werden. Diese Steuereinheit ermöglicht eine koordinierte, gekoppelte Bewegung der Schleifkörper gleichzeitig entlang der zweiten und der dritten Achse. Der Tangentialfreiwinkel wird in diesem Fall dadurch variiert, dass für unterschiedlich Punkte an der Zahnflanke entlang der zweiten Achse der Versatz eines Schleifkörpers entlang der dritten Achse verschieden groß gewählt wird.

Zweckmäßigerweise sind die beiden Schleifeinheiten auf einem gemeinsamen Träger in Gestalt beispielsweise eines Tisches angeordnet, der mittels des dritten Antriebs entlang der dritten Achse bewegbar sein kann. Bei einer derartigen Ausgestaltung der erfindungsgemäßen Schleifmaschine können die beiden Schleifeinheiten mittels eines einzigen Antriebs synchron entlang der dritten Achse bewegt werden. Es ist jedoch auch denkbar, für jede der beiden Schleifeinheiten einen separaten Antrieb vorzusehen, um die beiden Schleifeinheiten unabhängig voneinander senkrecht zur ersten und zur zweiten Achse zu bewegen.

Für den Fall, dass die beiden Schleifeinheiten auf einem gemeinsamen Träger angeordnet sind, kann der Träger mittels des zweiten Antriebs zusätzlich entlang der zweiten Achse bewegbar ausgestaltet sein. Die beiden Schleifeinheiten lassen sich dann synchron parallel zu den Drehachsen der Schleifkörper, d.h. in und entgegen der Zustellrichtung, bewegen. Falls die beiden Schleifeinheiten unabhängig voneinander entlang der zweiten Achse bewegbar sein sollen, kann jedoch auch für jede der beiden Schleifeinheiten ein separater Antrieb vorgesehen werden.

Gemäß einer bevorzugten Ausführungsform ist ein vierter Antrieb vorhanden, welcher es ebenfalls gestattet, eine der beiden Schleifeinheiten senkrecht zu der Sägeblattebene zu bewegen. Mittels des ersten und des vierten Antriebs können die beiden Schleifeinheiten dann unabhängig voneinander entlang je einer senkrecht zur Sägeblatteben verlaufenden Achse bewegt werden.

Zweckmäßigerweise umfasst zumindest der dritte Antrieb einen Servomotor. Auch die weiteren Antriebe können mit einem Servomotor ausgestattet werden.

Weitere Einzelheiten und Vorteile der Erfindung ergeben sich aus der nachfolgenden Beschreibung eines bevorzugten Ausführungsbeispiels sowie aus den Figuren. Es zeigt:
- Fig. 1: eine erste perspektivische Ansicht einer erfindungsgemäßen Schleifmaschine;
- Fig. 2: eine zweite perspektivische der in Fig. 1 dargestellten Schleifmaschine;
- Fig. 3: die Antriebe der erfindungsgemäßen Schleifeinheit;
- Fig. 4: den Angriff eines scheibenförmigen Schleifkörpers an einem Sägeblatt; und
- Fig. 5: die für das Schleifen eines Sägeblatts relevanten Winkel;
- Fig. 6: ein mit der in den Fig. 1 bis 3 dargestellten Schleifmaschine gemäß dem erfindungsgemäßen Schleifverfahren geschliffenes Sägeblatt.

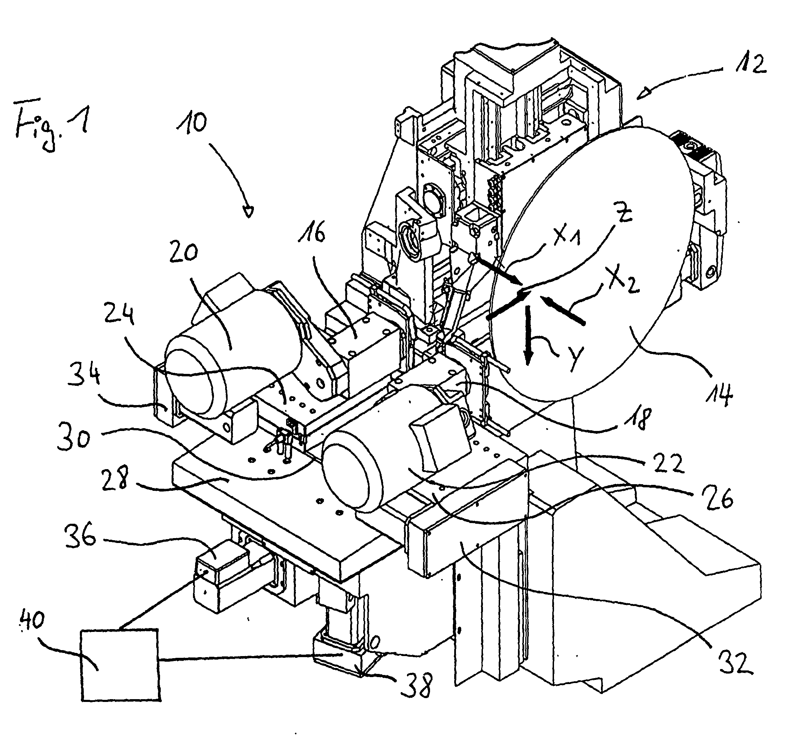

In Fig. 1 ist eine perspektivische Ansicht eines Ausführungsbeispiels der erfindungsgemäßen Schleifmaschine 10 und einer Positioniervorrichtung 12 für ein Sägeblatt 14 dargestellt. Die Positioniervorrichtung 12 gestattet ein vom Sägeblattdurchmesser unabhängiges Positionieren des Sägeblatts bezüglich der Schleifmaschine 10.

Die Schleifmaschine 10 umfasst zwei Schleifeinheiten 16, 18 mit je einem in Fig. 1 verdeckten Schleifkörper in Gestalt einer Schleifscheibe. Jeder Schleifeinheit 16, 18 ist je ein Antriebsmotor 20, 22 für den Schleifkörper zugeordnet.

Jede der beiden Schleifeinheiten 16, 18 ist mit dem dazugehörigen Antriebsmotor 20, 22 auf einem eigenen Schlitten 24, 26 angeordnet. Die Schleifmaschine 10 umfasst einen tischartigen Träger 28, der mit einer Führung 30 für die beiden Schlitten 24, 26 versehen ist. Die Führung 30 ist derart ausgebildet, dass die beiden Schlitten 24, 26 zusammen mit den darauf angeordneten Schleifeinheiten 16, 18 senkrecht zu derjenigen Ebene, in welcher das Sägeblatt 14 angeordnet ist, geführt verschiebbar sind.

Für jeden der beiden Schlitten 24, 26 ist je ein Antrieb 32, 34 vorgesehen. Mittels der beiden Antriebe 32, 34 lassen sich die beiden Schleifeinheiten 16, 18 entlang der Führung 30 bewegen. Die erste Schleifeinheit 16 kann von dem ihr zugeordneten Antrieb 34 entlang einer senkrecht zu der Sägeblattebene verlaufenden und durch den Pfeil x₁ gekennzeichneten ersten Achse bewegt werden. Die zweite Schleifeinheit 18 lässt sich mittels des ihr zugeordneten Antriebs 32 entlang einer zu der Achse x₁ koaxialen und durch den Pfeil x₂ gekennzeichneten Achse bewegen.

Für den Träger 28 ist ein eigener Antrieb 36 vorgesehen. Der Antrieb 36 dient der Zustellung der Schleifeinheiten 16, 18. Mittels des Antriebs 36 lassen sich der Träger 28 und die auf dem Träger angeordneten Schleifeinheiten 16, 18 parallel zu den Drehachsen der Schleifkörper verschieben. Der Antrieb 36 dient daher dem gemeinsamen Bewegen der Schleifeinheiten 16, 18 entlang einer durch den Pfeil z (Zustellrichtung) gekennzeichneten und parallel zu den Schleifkörper-Drehachsen verlaufenden Achse.

Der Träger 28 ist mit einem weiteren Antrieb 38 gekoppelt, welcher es ermöglicht, den Träger 28 sowohl senkrecht zur z-Achse als auch senkrecht zu den beiden x-Achsen zu bewegen. Die von dem Antrieb 38 induzierte Bewegung der Schleifeinheiten 16, 18 ist durch den Pfeil y gekennzeichnet. Der Pfeil y kennzeichnet folglich diejenige Achse, entlang welcher die beiden Schleifeinheiten 16, 18 mittels des Antriebs 38 bewegbar sind.

Die Schleifmaschine 10 umfasst weiterhin eine schematisch dargestellte Steuereinheit 40, welche ein gemeinsames Ansteuern des Antriebs 36 für eine Bewegung entlang der z-Achse und des Antriebs 38 für eine Bewegung entlang der y-Achse gestattet. Obwohl in Fig. 1 nicht eingezeichnet, steuert die Steuereinheit 40 auch die Antriebe 32, 34 für die Schleifeinheiten 16, 18.

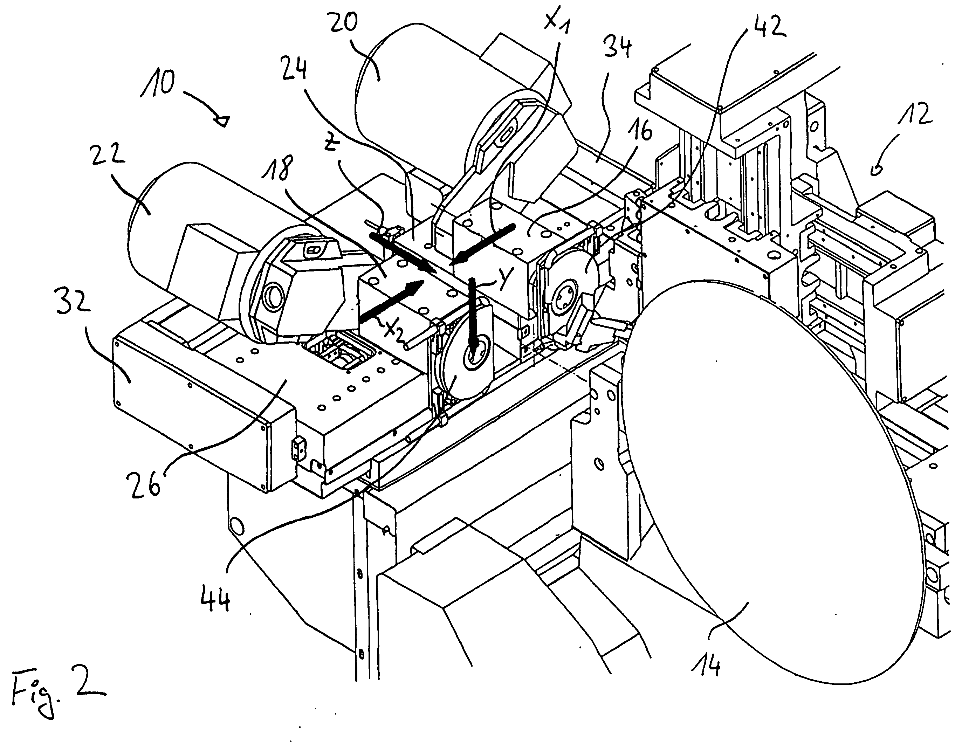

In Fig. 2 ist die in Fig. 1 dargestellte Schleifmaschine 10 aus einer anderen Perspektive wiedergegeben. Zu erkennen ist der scheibenförmige erste Schleifkörper 42, welcher der ersten Schleifeinheit 16 zugeordnet ist, sowie der ebenfalls scheibenförmige zweite Schleifkörper 44 der zweiten Schleifeinheit 18.

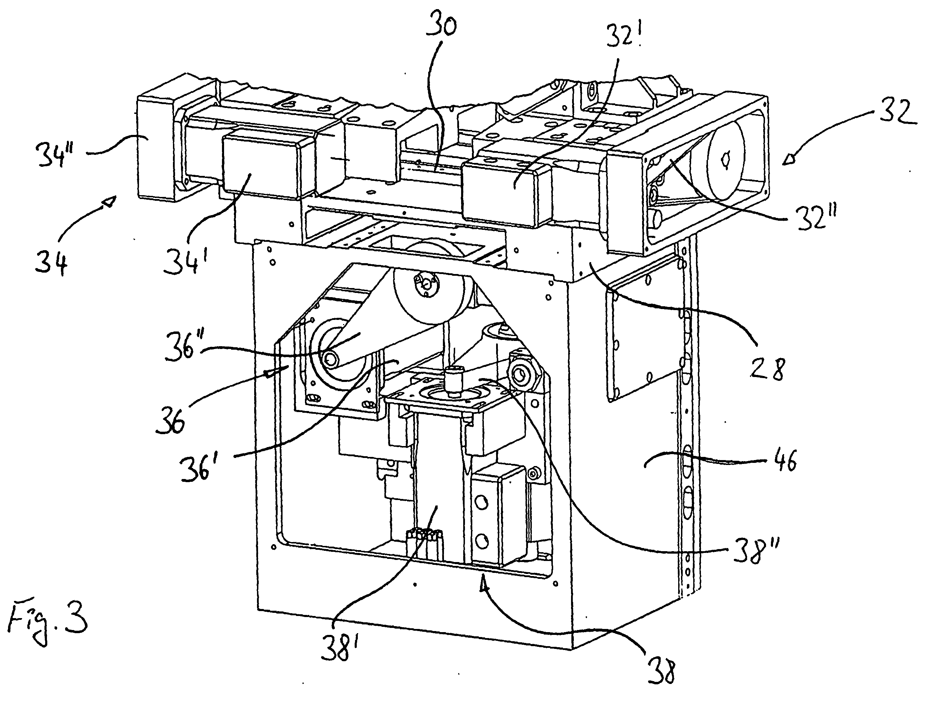

Fig. 3 zeigt mögliche Ausgestaltungen der in den Fig. 1 und 2 dargestellten Antriebe 32, 34, 36, 38. Jeder der Antriebe 32, 34, 36, 38 umfasst einen Servomotor 32', 34', 36', 38', welcher über einen Riemen 32", 34', 36", 38" mit je einem in Fig. 3 nicht bezeichneten Kugelgewindetrieb gekoppelt ist. Bei der in Fig. 3 dargestellten Schleifmaschine 10 ist der Unterbau 46 des Trägers 28 geringfügig anders als bei der Schleifmaschine gemäß den Fig. 1 und 2 ausgebildet. Funktionelle Änderungen ergeben sich hierdurch jedoch nicht.

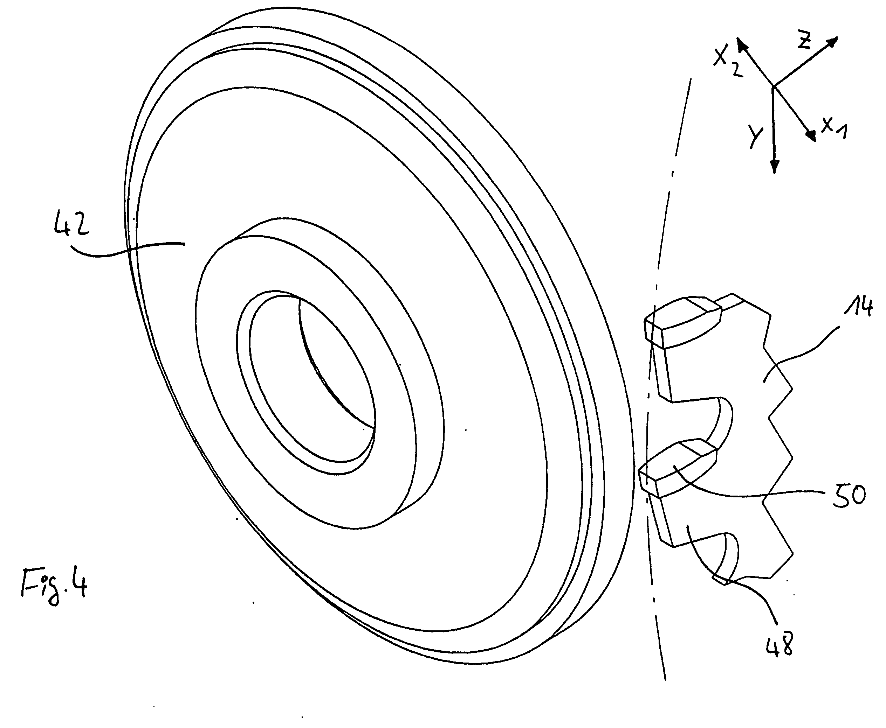

In Fig. 4 ist schematisch der Angriff des in Fig. 2 dargestellten scheibenförmigen Schleifkörpers 42 am Sägeblatt 14, genauer gesagt am Hartmetallbesatz 50 eines Sägeblattzahns 48, skizziert.

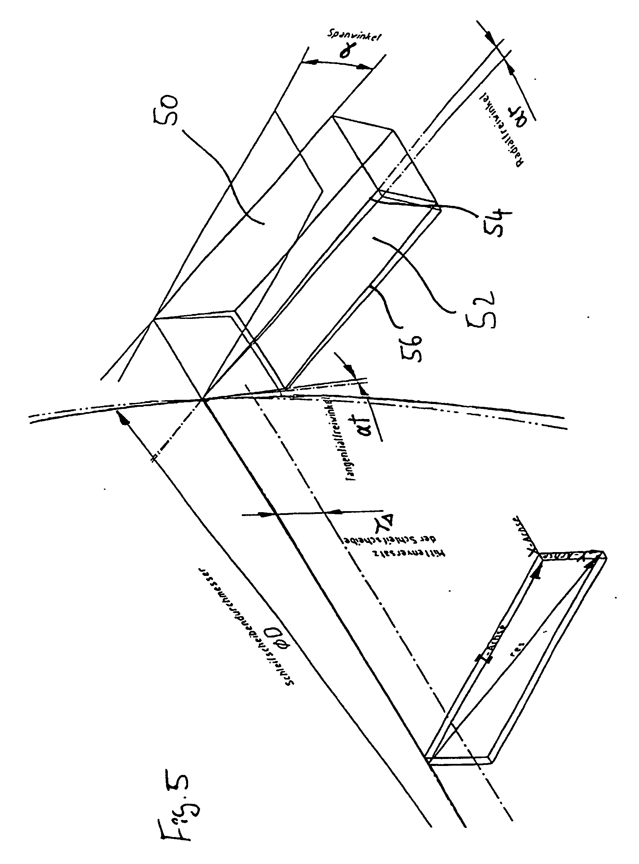

Fig. 5 zeigt die beim Schleifen des Hartmetallbesatzes 50 relevanten Winkel, nämlich den Spanwinkel α, den Radialfreiwinkel αᵣ und den Tangentialfreiwinkel αₜ. Durch geeignete Steuerung der einzelnen Antriebe der Schleifmaschine lassen sich beliebige Spanwinkel α, Radialfreiwinkel αᵣ und Tangentialfreiwinkel αₜ programmieren und automatisch schleifen, so dass eine manuelle Einstellung entbehrlich ist. Grund hierfür ist vor allem das Vorsehen des zusätzlichen Antriebs für ein Bewegen der Schleifeinheiten entlang der y-Achse. Gegenstand der nachfolgenden Betrachtung ist in erster Linie das Ausbilden eines in z-Richtung variierenden Tangentialfreiwinkels αₜ. Spanwinkel α und Radialfreiwinkel αᵣ, lassen sich jedoch auf ähnliche Weise programmgesteuert schleifen.

Der Tangentialfreiwinkel aₜ einer Zahnflanke 52 an einem bestimmten Ort entlang der z-Achse ist eine Funktion der Lage der oberen Längskante 54 der Zahnflanke 52 relativ zur Lage der unteren Längskante 56. Verläuft an einem bestimmten Punkt auf der z-Achse die Tangente, welche gegenüberliegende Punkte der beiden Längskanten 54, 56 verbindet, parallel zur Sägeblattebene, so beträgt der Tangentialfreiwinkel αₜ 0°. Verläuft die Tangente hingegen schräg zur Sägeblattebene, so ist der Tangentialfreiwinkel αₜ je nach Lage der Tangente größer oder kleiner als 0°.

Der sich beim Schleifen einstellende Tangentialfreiwinkel αₜ ist eine Funktion der relativen Lage des Angriffspunkts der Schleifscheibe an der Zahnflanke 52 entlang der y-Achse. Dies bedeutet, dass mittels eines Versatzes Δy der Schleifscheibe relativ zur Zahnflanke 52 entlang der y-Achse Einfluss auf die Größe des Tangentialfreiwinkels αₜ genommen werden kann.

Wenn nun während des Schleifvorgangs im Laufe einer Relativbewegung zwischen dem Schleifkörper und dem zu bearbeitenden Hartmetallbesatz entlang der z-Achse die Position der Schleifscheibe entlang der y-Achse verändert wird, verändert sich gleichzeitig die Lage des Angriffspunkts der Schleifscheibe entlang der y-Achse an der zu bearbeitenden Flanke 52, d.h. der Tangentialfreiwinkel αₜ. Das Tangentialfreiwinkelprofil der Zahnflanke 52 lässt sich daher mittels geeigneter Steuerung der Bewegung des Schleifkörpers entlang der z-Achse und der y-Achse gezielt beeinflussen.

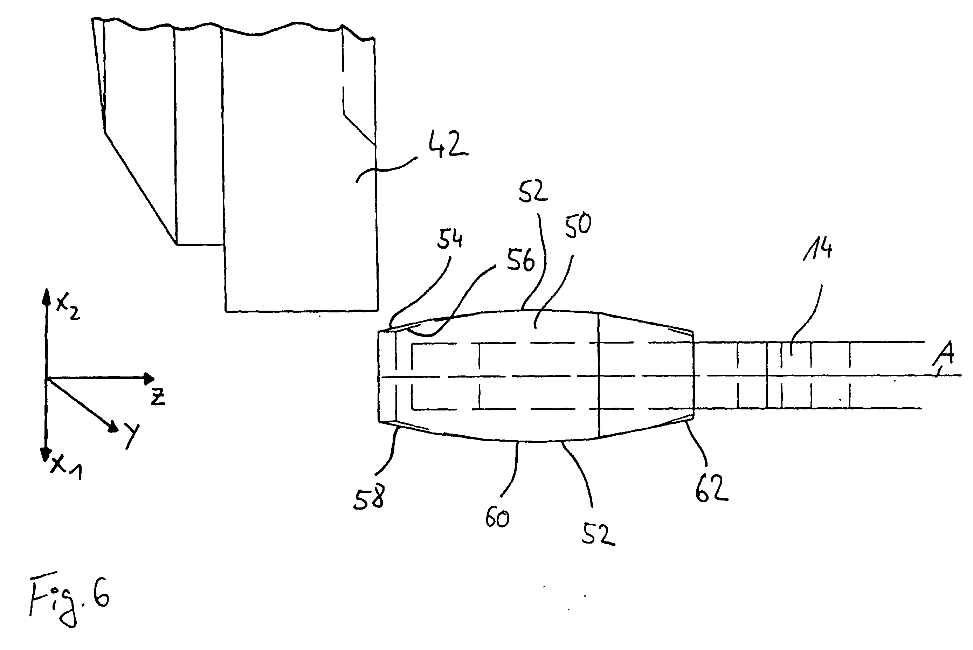

In Fig. 6 ist der Hartmetallbesatz 50 schematisch nach Beendigen eines Schleifvorgangs dargestellt. Die Zahnflanken 52 des Hartmetallbesatzes 50 wurden ballig geschliffen.

Die obere Längskante 54 der Zahnflanke 52 ist als durchgezogene Linie und die untere Längskante 56 als gestrichelte Linie gezeichnet. In der Aufsicht auf den Hartmetallbesatz 50 gemäß Fig. 6 ist deutlich zu erkennen, dass in einem mittigen Bereich 60 des Hartmetallbesatzes 50 entlang der z-Achse, d.h. in dem Bereich 60 der maximalen Bauchung, die Tangente, welche gegenüberliegende Punkte der Seitenkanten 54, 56 miteinander verbindet, parallel zur Sägeblattebene verläuft. Der Tangentialfreiwinkel αₜ beträgt daher in diesem Bereich 60 exakt 0°.

Bewegt man sich nun ausgehend von dem Punkt 60 entlang der z-Achse nach links oder nach rechts, so ist die untere Längskante 56 bezüglich der oberen Längskante 54 zunehmend in die Richtung auf die Längsachse A des Hartmetallbesatzes 50 versetzt. Dies bedeutet, dass der Tangentialfreiwinkel αₜ ausgehend von dem Punkt 60 in beiden Richtungen entlang der z-Achse betragsmäßig allmählich zunimmt. Eine derartige Variation des Tangentialfreiwinkels αₜ entlang der Zahnflanke 52 ist auf das Zusammenwirken des in Fig. 1 dargestellten Antriebs 36 mit dem Antrieb 38 zurückzuführen.

Die Profilierung der Zahnflanken 52 hinsichtlich des Tangentialfreiwinkels αₜ kann beliebig programmiert und geschliffen werden. Wie in Fig. 6 dargestellt, kann der Tangentialfreiwinkel αₜ in der Mitte 60 der Zahnflanke 52 betragsmäßig minimal gewählt werden (z.B. αₜ = 0°). In Richtung auf sich bezüglich der Mitte 60 diametral gegenüberliegende Bereiche 58, 62 der Zahnflanke 52 kann der Tangentialfreiwinkel αₜ betragsmäßig kontinuierlich zunehmen. In den Endbereichen 58, 62 des Hartmetallbesatzes 50 ist der Tangentialfreiwinkel αₜ vorzugsweise positiv und betragsmäßig am größten. Er liegt dann z.B. im Bereich +1° ≤ αₜ ≤ +3°.

## Patentansprüche

1. Schleifmaschine (10) zum beidseitigen Schleifen von Zahnflanken (52) insbesondere hartmetallbestückter Kreissägeblätter (14), mit
- zwei Schleifeinheiten (16, 18) mit je einem Schleifkörper (42, 44);
- einem ersten Antrieb (32, 34), um mindestens eine der beiden Schleifeinheiten (16, 18) entlang einer ersten Achse (x₁, x₂), die senkrecht zu einer das Sägeblatt (14) enthaltenden Ebene verläuft, zu bewegen;
- einem zweiten Antrieb (36), um mindestens eine der beiden Schleifeinheiten (16, 18) entlang einer zweiten Achse (z), die parallel zu Drehachsen der Schleifkörper (42, 44) verläuft, zu bewegen, und
- einem dritten Antrieb (38), um mindestens eine der beiden Schleifeinheiten (16, 18) entlang einer dritten Achse (y), die senkrecht zur ersten (x₁, x₂) und zur zweiten (z) Achse verläuft, zu bewegen, wobei
für mindestens den zweiten (36) und den dritten (38) Antrieb eine gemeinsame Steuereinheit (40) vorhanden ist **dadurch gekennzeichnet, dass** für die Steuereinheit (40) ein Programm hinterlegt ist, welches die Bewegungen der Schleifeinheiten (16, 18) entlang der zweiten (z) und der dritten (y) Achse derart koordiniert, dass während des Schleifens eines Zahns (48) ein Tangentialfreiwinkel (αₜ) der Zahnflanken (52) entlang der zweiten Achse (z) variiert wird.

2. Schleifmaschine nach Anspruch 1,
**dadurch gekennzeichnet, dass** die beiden Schleifeinheiten (16, 18) auf einem gemeinsamen Träger (28) angeordnet sind, der mittels des dritten Antriebs (38) entlang der dritten Achse (y) bewegbar ist.

3. Schleifmaschine nach Anspruch 2,
**dadurch gekennzeichnet, dass** der Träger (28) mittels des zweiten Antriebs (36) zusätzlich entlang der zweiten Achse (z) bewegbar ist.

4. Schleifmaschine nach einem der Ansprüche 1 bis 3,
**dadurch gekennzeichnet, dass** ein vierter Antrieb (34) vorhanden ist und mittels des ersten (32) und des vierten (34) Antriebs die beiden Schleifeinheiten (16, 22) unabhängig voneinander entlang der ersten Achse (x₁) und einer zur ersten Achse (x₁) parallelen zweiten Achse (x₂) bewegbar sind.

5. Schleifmaschine nach einem der Ansprüche 1 bis 6,
**dadurch gekennzeichnet, dass** zumindest der dritte Antrieb (38) einen Servomotor (38') umfasst.

6. Verfahren zum Steuern einer Schleifmaschine (10) nach einer der Ansprüche 1 bis 5,
**dadurch gekennzeichnet, dass** während des Schleifens eines Zahns (46) ein Tangentialfreiwinkel (αₜ) der Zahnflanke (52) entlang der Zahnflanke (52) variiert wird.

7. Verfahren nach Anspruch 6,
**dadurch gekennzeichnet, dass** der Tangentialfreiwinkel (αₜ) mittels gemeinsamen Ansteuerns des zweiten (36) und des dritten (38) Antriebs variiert wird.

8. Verfahren nach Anspruch 6 oder 7,
**dadurch gekennzeichnet, dass** der Tangentialfreiwinkel (αₜ) ungefähr in der Mitte (60) der Zahnflanke (52) betragsmäßig minimal gewählt wird.

9. Verfahren nach einem der Ansprüche 6 bis 8,
**dadurch gekennzeichnet, dass** der Tangentialfreiwinkel (αₜ) in bezüglich der Mitte (60) sich diametral gegenüberliegenden Bereichen (58, 62) der Zahnflanke (52) mit zunehmendem Abstand von der Mitte (60) kontinuierlich ansteigend gewählt wird.

10. Verfahren nach einem der Ansprüche 1 bis 9,
**dadurch gekennzeichnet, dass** zur Profilierung der Zahnflanken (52) der Tangentialfreiwinkel (αₜ) entlang der Zahnflanken (52) **dadurch** variiert wird, dass für unterschiedliche Punkte an einer Zahnflanke (52) entlang der zweiten Achse (z) der Versatz eines der Schleifkörper (42, 44) der dritten Achse (y) verschieden groß gewählt wird.

## Claims

1. Grinding machine (10) for double-sided grinding of tooth flanks (52), in particular of hard-metal tipped circular saw blades (14), comprising
- two grinding units (16, 18) each with a grinding body (42, 44);
- a first drive (32, 34) to move at least one of the two grinding units (16, 18) along a first axis (x₁, x₂) running perpendicular to a plane containing the saw blade (14),
- a second drive (36) to move at least one of the two grinding units (16, 18) along a second axis (z) running parallel to axes of rotation of the grinding bodies (42, 44) and
- a third drive (38) to move at least one of the two grinding units (16, 18) along a third axis (y) running perpendicular to the first (x₁, x₂) and the second (z) axis, wherein
for at least the second (36) and the third (38) drive a joint control unit (40) is provided
**characterised in that** a programme is provided for the control unit (40) that coordinates the movements of the grinding units (16, 18) along the second (z) and the third (y) axis in such a way that during grinding of a tooth (48) a tangential clearance angle (aₜ) of the tooth flanks (52) is varied along the second axis (z).

2. Grinding machine according to claim 1, **characterised in that** the two grinding units (16, 18) are arranged on a joint carrier (28) which is movable along the third axis (y) by means of the third drive (38).

3. Grinding machine according to claim 2, **characterised in that** the carrier (28) is additionally movable along the second axis (z) by means of the second drive (36).

4. Grinding machine according to one of claims 1 to 3, **characterised in that** a fourth drive (34) is provided and the two grinding units (16, 22) are movable along the first axis (x₁) and a second axis (x₂) parallel to the first axis (x₁) independently of one another by means of the first (32) and the fourth (34) drive.

5. Grinding machine according to one of claims 1 to 6, **characterised in that** at least the third drive (38) comprises a servomotor (38').

6. Method for controlling a grinding machine (10) according to one of claims 1 to 5, **characterised in that** during the grinding of a tooth (46) a tangential clearance angle (aₜ) of the tooth flank (52) is varied along the tooth flank (52).

7. Method according to claim 6, **characterised in that** the tangential clearance angle (aₜ) is varied by means of joint activation of the second (36) and the third (38) drive.

8. Method according to claim 6 or 7, **characterised in that** the tangential clearance angle (aₜ) is chosen as minimal in amount approximately in the centre (60) of the tooth flank (52).

9. Method according to one of claims 6 to 8, **characterised in that** the tangential clearance angle (aₜ) is chosen as constantly increasing in areas (58, 62) of the tooth flank (52) located diametrically opposite one another in respect of the centre (60) with increasing distance from the centre (60).

10. Method according to one of claims 1 to 9, **characterised in that** for profiling the tooth flanks (52) the tangential clearance angle (aₜ) is varied along the tooth flanks (52) **in that** the offset of one of the grinding bodies (42, 44) of the third axis (y) is chosen of varying size for different points on a tooth flank (52) along the second axis (z).

## Revendications

1. Affûteuse (10) destinée à l'affûtage bilatéral des faces de dents (52), en particulier des lames de scie circulaire (14) à plaquette carbure rapportée, comportant
- deux unités de meulage (16, 18) comportant chacune un corps de meulage (42, 44) ;
- un premier entraînement (32, 34) pour déplacer au moins l'une des deux unités de meulage (16, 18) le long d'un premier axe (x₁, x₂), qui est orienté perpendiculairement à un plan contenant la lame de scie (14) ;
- un deuxième entraînement (36) pour déplacer au moins l'une des deux unités de meulage (16, 18) le long d'un deuxième axe (z), qui est orienté parallèlement aux axes de rotation des corps de meulage (42, 44), et
- un troisième entraînement (38) pour déplacer au moins l'une des deux unités de meulage (16, 18) le long d'un troisième axe (y), qui est orienté perpendiculairement au premier axe (x₁, x₂) et au deuxième axe (z),
- une unité de commande (40) commune étant prévue pour au moins le deuxième entraînement (36) et le troisième entraînement (38),
**caractérisée en ce qu'**un programme est intégré pour l'unité de commande (40), par lequel les mouvements des unités de meulage (16, 18) le long du deuxième axe (z) et du troisième axe (y) sont coordonnés de telle sorte que pendant l'affûtage d'une dent (48) on fait varier un angle de dépouille tangentiel (αₜ) des faces de dent (52) le long du deuxième axe (z).

2. Affûteuse selon la revendication 1, **caractérisée en ce que** les deux unités de meulage (16, 18) sont agencées sur un support (28) commun, qui peut se déplacer le long du troisième axe (y) au moyen du troisième entraînement (38).

3. Affûteuse selon la revendication 2, **caractérisée en ce que** le support (28) peut se déplacer le long du deuxième axe (z) au moyen du deuxième entraînement (36).

4. Affûteuse selon l'une quelconque des revendications 1 à 3, **caractérisée en ce qu'**il est prévu un quatrième entraînement (34) et les deux unités de meulage (16, 22) peuvent être déplacées indépendamment l'une de l'autre au moyen du premier entraînement (32) et du quatrième entraînement (34) le long du premier axe (x₁) et d'un deuxième axe (x₂) parallèle au premier axe (x₁).

5. Affûteuse selon l'une quelconque des revendications 1 à 6, **caractérisé en ce qu'**au moins le troisième entraînement (38) comporte un servomoteur (38').

6. Procédé destiné à commander une affûteuse (10) selon l'une quelconque des revendications 1 à 5, **caractérisé en ce que**, pendant l'affûtage d'une dent (46), on fait varier l'angle de dépouille tangentiel (αₜ) de la face de dent (52) le long du flanc de dent (52).

7. Procédé selon la revendication 6, **caractérisé en ce que** l'on fait varier l'angle de dépouille tangentiel (αₜ) au moyen d'une commande conjointe du premier (36) et du deuxième (38) entraînement.

8. Procédé selon la revendication 6 ou 7, **caractérisé en ce que** l'angle de dépouille tangentiel (αₜ) est choisi avec sa valeur minimale à peu près au centre (60) de la face de dent (52).

9. Procédé selon l'une quelconque des revendications 6 à 8, **caractérisé en ce que** l'angle de dépouille tangentiel (αₜ) dans des zones (58, 62), diamétralement opposées par rapport au centre (60), de la face de dent (52) est choisi en augmentation continue en s'écartant progressivement du centre (60).

10. Procédé selon l'une quelconque des revendications 1 à 9, **caractérisé en ce que** pour le profilage des faces de dents (52), on fait varier l'angle de dépouille tangentiel (αₜ) le long de la face de dent (52) par le fait que le décalage de l'un des corps de meulage (42, 44) du troisième axe (y) est choisi avec une valeur différente pour différents points sur une face de dent (52) le long du deuxième axe (z).
